Europäisches Patentamt

European Patent Office

Office européen des brevets

(11) Publication number: **0 414 156 A2**

# EUROPEAN PATENT APPLICATION

(21) Application number: 90115831.1

(22) Date of filing: 17.08.90

(51) Int. Cl.⁵: **B67D 1/12, B67D 1/14,** G01F 1/34

(30) Priority: 20.08.89 US 410313

(43) Date of publication of application:
27.02.91 Bulletin 91/09

(84) Designated Contracting States:
DE DK FR GB IT NL SE

(71) Applicant: CONTROL TECHNOLOGY, INC.
1881 State Street
Garland, Texas 75042(US)

(72) Inventor: Turner, Charles S.
12323 Creekspan
Dallas, Texas 75243(US)

(74) Representative: Patentanwälte Grünecker,
Kinkeldey, Stockmair & Partner
Maximilianstrasse 58
D-8000 München 22(DE)

(54) Beverage dispensing system.

(57) A beverage dispenser (10) includes a housing (12) for a pressurized beverage container, a flow meter (18) connected between the pressurized container and a faucet (22). A valve assembly (66,68,80) is attached to the faucet for opening and closing the faucet responsive to an electromechanical actuator (104,106,108). A programmable controller (30) in response to differential pressure indicating signals produced by the flow meter determines the flow rate incrementally and the incremental quantities are accumulated for comparison with a preselected programmed quantity for pouring a preselected quantity of the beverage and actuates the electromechanical actuator for the time necessary to pour the selected amount of beverage. The flow meter includes a line segment (111) of known length, size and material. The known length provides a measurable pressure difference owing to the drag therein as opposed to the measurable pressure difference obtained from the head of a manometer type flow meter. Thus, a substantially larger difference pressure measurement is obtainable. A differential pressure transducer (126) is connected to passageways (124,126) connected to line segment ports (128,130) located at beginning and ending points of the line segment for measuring the pressure differential and outputting electrical signs indicative thereof for use by the programmable controller in determining continuously during the pouring time the quantities for a preselected amount of the beverage. The valve assembly includes a valve stem sleeve (82) attached between the faucet end. The sleeve includes at the end adjacent to the faucet a seal expander (92) for wiping clean the portion of the valve stem (96) exposed to the beverage during valve opening. This prevents seepage of the beverage into the valve sleeve where it can solidify to stick the valve.

FIG. 1

## BEVERAGE DISPENSING SYSTEM

This invention relates to beverage dispensing device and more particularly to a draft beer dispenser.

In prior beverage dispensing devices substantial quantities of beverages have been lost through spillage resulting from malfunctioning valves. Also customer dissatisfaction with automatic beverage dispensing devices especially automatic beer dispenser has resulted from their failure to pour consistently preselected quantities.

Beverage dispensing devices and beer dispensing devices in particular have in common a faucet and shank forming a passageway for connection to a beverage source through flexible tubing and a beverage outlet spout. A valve seat is provided within the faucet for seating a sealing member. A valve housing has a first end in open communication with the valve seat, and an opposing open end to which a valve actuator ball pivot is threadedly attached. A valve stem contained in the housing interconnects the sealing member to the valve actuator. One end of the valve stem 15 connected to the sealing member: the opposite end of the valve stem is provided with a pair of spaced pistons. The actuator lever has an end connected between the spaced pistons of the valve stem. Thus, the valve actuator engages the pistons to seat and unseat the sealing member. A problem with these devices is that in disassembling the valve for cleaning and reassembling the device the actuator can be over tightened thereby increasing the force required to operate the valve.

In known valve designs there is no seal to prevent the beverage from entering the piston/housing area. The beverage over a period of time evaporates and leaves a solid residue which builds up to retard operation of the valve actuator. If the residue is not removed the pistons will seize. Beer is particularly bad. The yeast and other solids in beer solidifies with time. During solidification increasing force is required for the actuator to open and close the valve. Thus, periodically the actuator must be removed, the valve disassembled and the pistons and cylinder cleaned to prevent complete immobilization of the valve and the formation of harmful bacteria.

In automatic beverage dispensing systems such as automatic beer dispensers. the actuator is connected to a computer controlled solenoid. This additional structure adds to the difficulty in disassembling the faucet for cleaning. Further, with the need for increasing valve operating pressure, careful control of the temperature and pressure cannot prevent variations in the amount poured. Various approaches to the cleaning problems have been made. These approaches have centered around designing faucets to facilitate disassembly, and using O-rings spaced apart in the cylinder to engage the spaced pistons of the valve stem on both sides of the actuator lever. Although seepage is reduced between the O-rings, damaging build up of solids on the stem areas which extend into the valve housing beyond the O-rings can occur. This buildup of solids will ultimately result in the sticking of the valve. For customer acceptance of automatic beverage dispensers, it is essential that the amount of beverage poured be accurate. Pressure and temperature are factors which contribute substantially to the pouring accuracy of automatic beverage dispenser systems. It is well known that liquid of any kind flowing in a line meets resistance to flow, or "drag". Drag in a line is a function of the size, material, and interior smoothness. Thus, drag results in a continuous drop in pressure throughout the total line length and is measured in pounds per square inch per inch. Changes in applied pressure at the beginning of a line of fixed length, size, and material results in a change in the rate of flow of liquid in the line; however, because of drag the flow of a liquid in the line is not linear. Thus, doubling the applied pressure will result in less than twice the rate of flow and correspondingly, reducing the applied pressure by one half of the previous setting will result in a reduction in flow of less than fifty percent. As the flow rate of fluid in a line is not linear and is dependent on the physical properties of the line it is difficult to measure a quantity based on pressure and temperature alone.

One means for accurately determining the quantity dispensed is to use pressure transducers to measure the flow rate of the liquid and calculate the time required to dispense a preselected quantity. Pressure sensors for flow meters, however, are very sensitive to pressure shock. Any sudden increase in pressure on one side of a differential pressure transducer will damage most pressure transducers. Sudden pressure increases exist as shock waves (water hammer) when a flowing liquid is abruptly stopped by the substantially instantaneous closing of the valve. Further, with existing flow meters the pressure difference transducers, such as those used in manometers, measure pressure differences indicated by difference in head measurements which are very small and require a substantial amount of amplification.

## SUMMARY OF THE INVENTION

Accordingly it is an object of the invention to provide an improved automatic beverage dispensing system.

Another object of the invention is to provide an automatic beverage dispensing system having an improved valve for eliminating substantially the formation of valve operating sticking solids.

Yet another object of the invention is to provide an automatic beverage dispensing system which is easily cleaned without disassembling the valve.

Still another object of the invention is to provide a valve actuator whose operating force is independent of cleaning operations.

A further object of the invention is to provide an automatic beverage dispensing system having a substantially improved flow meter for measuring the flow rate of the beverage for use in determining the valve operating time to pour consistently preselected amounts of the beverage.

Briefly stated the automatic beverage dispensing system of the invention includes a pressurized beverage container, and a flow meter connected between the container and a faucet. The faucet has a passageway through it including a valve seat and an outlet spout. A valve mechanism includes a valve stem having at one end a sealing member adapted to seat in the valve seat to open and close the passageway. An actuator drives the valve mechanism and a programmable controller controls operation of the actuator in response to time signals developed from pressure difference measurements of the flow meter.

In accordance with one feature of the invention, an improved valve mechanism is provided which precludes entry of beverages into the working parts of the valve mechanism where they form solids. The solids jam the working parts of the valve mechanism to seize the valve mechanism. The valve mechanism, which will be described in detail hereinafter, includes a valve stem having a sealing member attached to one end adapted to seat in the valve seat of the faucet for opening and closing the passageway. A seal assembly is attached to the faucet and has a gasket at an end adjacent to the passageway for slidably receiving a body portion of the valve stem. The portion of the valve stem subjected to the beverage passing through the passageway during the time the valve is open is wiped clean by the gasket of the seal assembly as it enters the seal assembly during valve closure. Further, a rocker arm type drive attached to drive the valve stem at its end replaces the ball and socket type drive.

In accordance with another feature of the invention: an improved flow meter is provided which utilized drag (friction) existing in and line segment of known length, size, and material and containing a flowing fluid to measure precisely the drop in pressure. The pressure drop is used to determine a flow rate, and subsequently converting the flow rate to a known precise quantity through an accurate time measurement. The flow meter includes a pressure differential transducer connected across the line segment to measure the drop in pressure across the known length of line. Thus, the pressure drop is independent of the total line length or position in the line where the fixed length is placed. Further as a pressure differential exists only when the beverage is flowing the beverage container's pressure is canceled including any excess keg pressure at the pressure differential transducer.

Also, any shock wave generated as a result of any sudden valve closure is canceled. This is because any shock wave generated is received substantially simultaneously on both sides of the pressure differential transducer through the line ports and is canceled. As the pressure differential transducer or other differential measuring device is not subjected to beverage container pressure or shock waves, very sensitive devices can be utilized to measure pressure differentials and produce signals of greater magnitude for improved accuracy. A computer compares the measured pressure differential to stored flow rates (look up table) to obtain a corresponding flow rate for computing continuously the amount of beverage being poured and closing the valve when the desired amount has been dispensed. The computer also controls the frequency at which the pressure differential measurements are taken; the higher the frequency the more accurate the quantity measurement.

BRIEF DESCRIPTION OF THE DRAWINGS

Other objects and features of the invention will become more readily apparent from the following detailed description when read in conjunction with the accompanying drawings, in which:

Figure 1 is an isometric view of the automatic beverage dispenser constituting the subject matter of the invention:

Figure 2 is a view of the automatic beverage disperser of the invention having a portion broken away to show the component parts of the faucet;

Figure 3 is an enlarged sectional view of the faucet shown in figure 2;

Figure 4 is a cross sectional view of the flow meter taken along line 4-4 of figure 2;

Figure 5 is a block diagram of the programmable controller; and

Figure 6a-6g constitute a flow chart for the program of the programmable controller.

DETAILED DESCRIPTION OF THE INVENTION

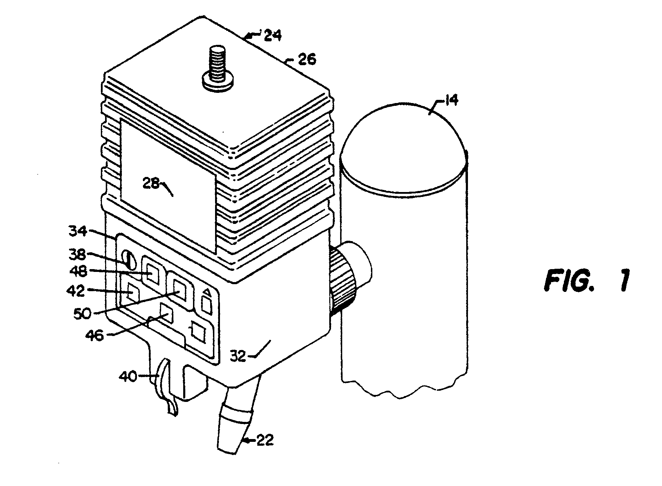

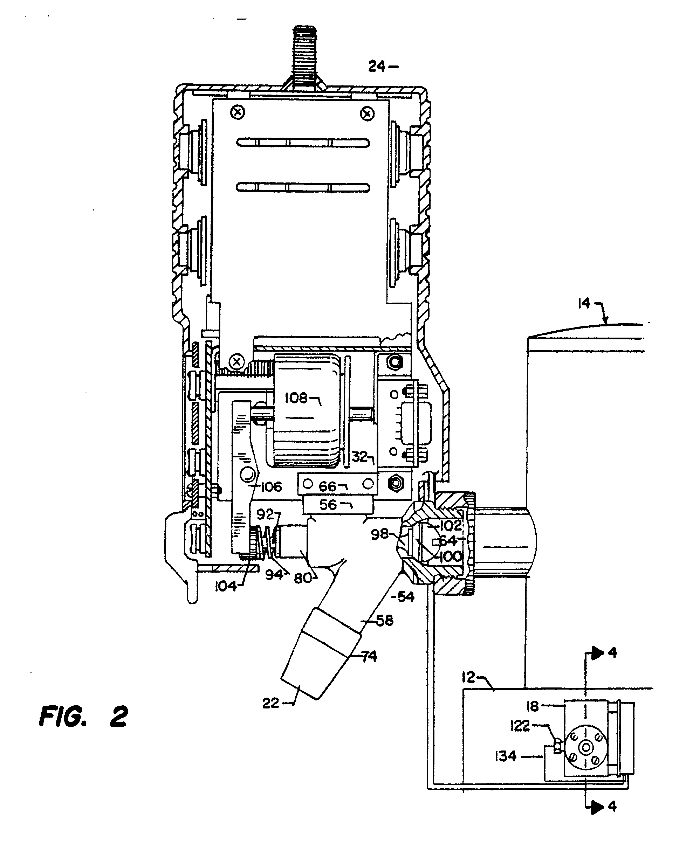

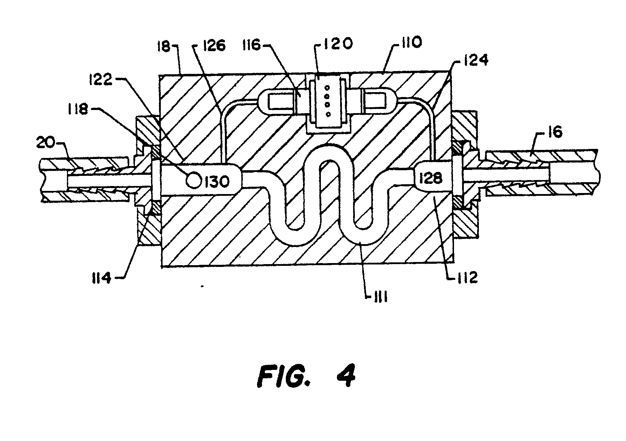

The automatic beer dispensing system 10 (Fig. 1) includes a housing 12 (Fig. 2) for a pressurized beverage system including, for example, a carbon dioxide bottle and one or more kegs of beer (not shown), a stanchion 14, a refrigerator unit (not shown) for cooling the beer kegs and stanchion, and a sink type support (not shown) for supporting beer receptacles. The carbon dioxide bottle is connected to a keg of beer for pressurization. A flexible tube 16 (Fig. 4) connects a keg of beer to a flow meter 18, hereinafter described in detail, and a flexible tube 20 connects the flow meter 18 to the stanchion 14 (Fig. 1). A faucet 22 (hereinafter described in detail is attached to the stanchion, and a housing 24 is connected to the faucet.

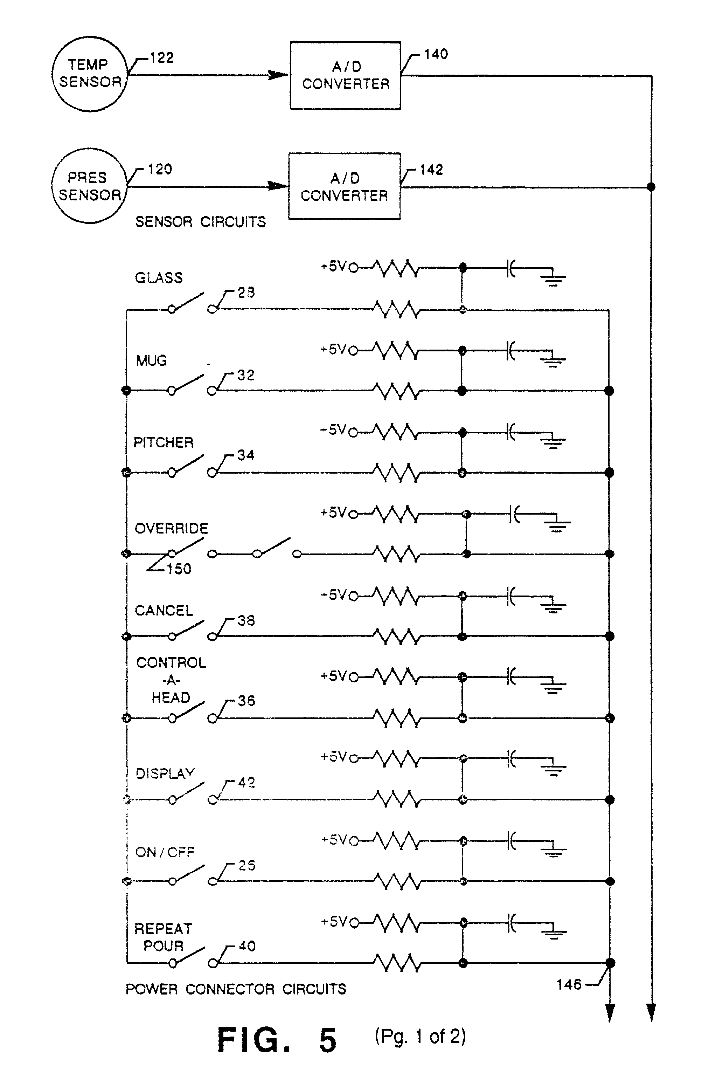

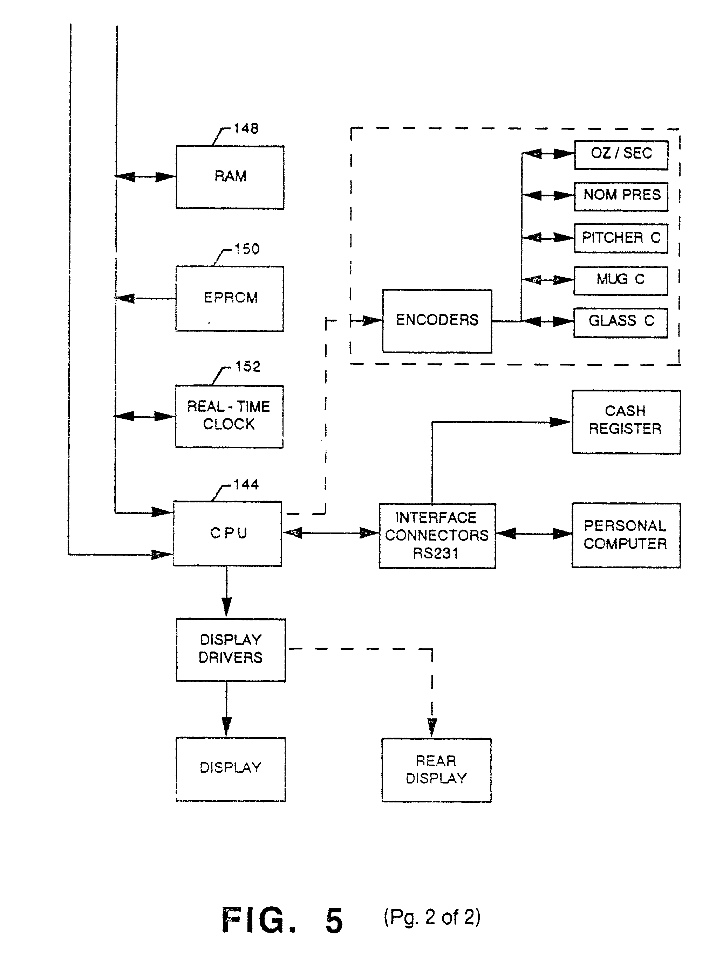

The housing 24 may include a top compartment 26 having a display panel 28 and a computerized controller 30 (FiG. 5), and a bottom compartment 32 (Fig. 1) having a front panel 34, and a keypad 36. These elements are combinable in a single compartment. The front panel 34 includes a plurality of operation selection switches taken from a group including a key switch 38, and a glass dispensing switch 40. The key switch 38 is either a normal/program switch or an on/off/purge switch. In the former a purge operation is provided when in the program mode. The keypad 36 includes a plurality of push buttons taken from the group including a mug button 42, a pitcher button 44, head control button 46, cancel button 48, repeat pour button 50, and a display button 52.

The display panel 28 is an electronic display which may be, for example, a vacuum fluorescent display (Fg. 12A2 manufactured by Nartoke Inc.) or a typical LED display. The displays are for displaying all the programmed functions provided and their on going status for constant monitoring and viewing. In the embodiment shown in Figure 1, the off/on/purge key switch 38 turns the unit on. There are two keys with each unit, the operations key and the master key. The operations key only will turn the unit from off to on. The master key will turn to all three positions. This provides operation control of the unit.

The on position activates the system for service and if all systems are normal will display a programmed message on the screen to this effect. However, if the temperature or pressure readings are out of proper operating parameters, the problem will be identified by a flashing message on the display screen for alerting one to the special problem for corrective action.

In the purge position the master key cannot be removed from the unit until it is turned back to the off or on position and therefore should not be out of reach of an authorized carrier during the purging or programming mode.

In either the on/off/purge key switch or the normal/program key switch designs, the purge mode is provided for cleaning the system. In the purge mode all of the functions will operate permitting a cleansing solution to be flushed through the system, without disassembling the system and in particular the valve.

The glass function switch 40 is adapted for actuation by pressing against the inside rim of a glass. During normal operation, this pressure activates the unit to dispense a specific size glass of beer. The word GLASS is displayed on the display to confirm the glass selection.

In the programming mode, the keypad is used to program, among other things, the quantity to be used in filling a glass, mug, or pitcher.

To obtain a mug of beer, a pitcher of beer, or to reform a head of foam on a glass, mug, or pitcher of beer, respectively, the mug function button 42, pitcher function button 44, or the head button 46 is pressed while holding a container for the beer selection under the faucet. Pressing these buttons will activate the unit and dispense a specific size mug, or pitcher of beer or a head of foam on the glass, mug, or pitcher. The display will display the word MUG, PITCHER, OR HEAD in accordance with the selection. Even though the selected button is held in the pressed position, only one beer or head will be poured for the selected container. To dispense another mug or pitcher or head of foam, the appropriate button must be released and pressed again. Nevertheless, repeated mug, pitcher or head dispensing may be provided using the repeat function button 50.

The cancel function button 48 may be pressed to immediately deactivate the system and terminate any current operation. No count will be recorded for the canceled item, but one count wil be recorded under the cancel function, the total number of ounces poured prior to activating the cancel button computed, and the total number of ounces recorded. This function is recallable under CANCEL OZS. when the display function is activated.


FAUCET

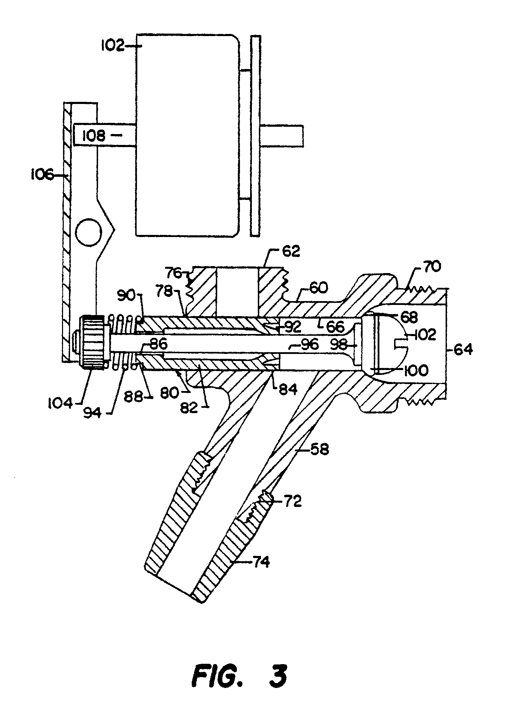

Referring now to Figure 2. the faucet 22 includes a faucet assembly 54 attached to the compartmentalized housing 24 by a threaded faucet mounting plate 56. The faucet assembly includes a faucet 58. The compartmentalized housing has an internally threaded faucet mounting plate 66 attached thereto for connecting the faucet 58 to the housing 32. The faucet includes a housing 60 (Fig. 3) having walls forming an externally threaded connector 62 for connecting the faucet to the faucet mounting plate, a passageway 64 for the beverage being dispensed, a valve stem passageway 66, and a valve seat 68 formed in the housing 60 in open communication with the passageways 64 and 66. The housing for passageway 64 has a connector 70 at a first end for connecting the faucet to the stanchion for conducting the beverage through the passageway to a second end having a connector 72 for attaching a faucet extension 74. The housing for the valve stem passageway has an end 76 having a connector 78 for receiving a valve stem seal assembly 80. The valve stem passageway 66, valve seat 68 and connector 70 are in axial alignment.

The seal assembly 80 includes a sealing sleeve 82 preferably of TEFLON having an end portion 84 for connection to the connector 76 of the valve stem passageway 66 of the faucet, and a valve stem guide 86 adjacent to the end 88 opposite the end portion 84. A coil spring support 90 is formed on the end 88. A seal expander spring 92 is mounted in the end portion 84 of the sleeve 82, and a coil spring 94 is mounted on the coil spring support 90.

A valve stem 96 is provided with a valve washer retainer 98 adjacent to a first end for retaining a valve washer 100. A valve stem screw 109 secures the valve washer to its retainer 98. The second or opposite end of the valve stem is provided with a bayonet type fastener to receive a coil spring retainer 104.

In operation, the valve stem with the valve washer attached is inserted bayonet end first through the faucet connector 70 end, valve seat 68, expander spring 92 and sleeve 82 of the sleeve assembly 80, and coil spring 94. Then the spring retainer 104 is screwed onto the bayonet end of the valve stem to retain the spring and to coact with the valve seat to retain the valve stem in the faucet. The valve stem has a highly polished bearing surface which forms with the seal assembly end a permanent barrier to prevent any seepage of beer between the stem and inside surface of the seal. Therefore, no buildup of yeast and beer solids can occur. The closing action of the valve wipes the beer from the stem surface as it passes through the seal; thus, always providing a dry polished surface in ontact with the seal which eliminates the formation of solids and consequent sticking of the valve in either the open or closed position. The valve construction thereby permits interim cleaning of the faucet by flushing with a cleaning solution without disassembly.

A rocker arm 106 (Fig. 2&3) of an electromechanical valve actuator is pivotally attached to a mount of the housing. The lower and upper end portions of the rocker arm engage, respectively, the valve stem retainer 104 and core of a solenoid 108. The programmable controller is connected to the solenoid for timing its operation to pour the selected quantity of beer.

Referring now to Figure 4. the flow meter 18 includes a block 110 of suitable material (plastic or metal) having walls forming a passageway 111, input and output forts 112 and 114 to the passageway, wells 11b and 118 for a differential pressure transducer 120. The pressure ports 128 and 130 are in open communication with the passageway and form, respectively, the beginning and ending points of a segment of the line. The length of the passageway between the pressure ports provides the line segment of known length and size. A suitable differential pressured transducer is a 16PC050F manufactured by Microswitch Division, Honeywell Instruments Inc.

In operation the passageway input and output ports 112 and 114 are connected, respectively, to the beer keg for admitting beer under pressure to the passageway and to the stanchion 14. The beer travels through the passageway to the first pressure port 128 and passageway 124 to one side of the differential pressure transducer 120, and then through the known length of the passageway 111 to the second pressure port 130 where it provides the pressure through the second pressure port 130 through the passageway 126 to an opposing side of the differential pressure transducer. The pressurized beer then flows out the output port 114 through the flexible tube 20 to the faucet 22. The differential pressure transducer 120 outputs an analog signal indicative of the difference in pressure of the beer between the beginning and ending pressure ports 128 and 130 over leads 132 (Fig. 2) to the programmable controller (Fig. 3). The temperature transducer 122 outputs an analog signal indicative of the temperature through lead 134 to the programmable controller.

Referring now to Figure 5, the programmable controller 30 includes analog to digital (A/D) converters 140 and 142 for converting, respectively, the pressure difference and temperature indicating signals to digital signals for a central processing unit 144 (CPU). A typical CPU is an 8031 microprocessor manufactured by Intel Corporation. A plurality of power connector circuits 146 connect the front panel button switches and on/off/purge switches to the CPU 144.

The CPU 144 is connected to a random access memory (RAM) 148, an erasable programmable read only memory (EPROM) 150, and real time clock 152. The RAM receives and stores the digitized differential pressure ane temperature signals together with other information for readout by the CPU. The information may include the count, prices for the glasses, mugs, and pitchers, and amount of each sales, if that feature is provided. The EPROM provides permanent storage of the programs and information such as the system operating parameters for readout. The EPROM contains a look up table for use in determining the proper dispensing flow rate for filling the beverage containers, which for beer include glasses, mugs, or pitchers. The look up table includes differential pressure readings and their corresponding rates of flow for the line segment and liquid (beer) known to be flowing therein. The Eprom contains the programmed instructions for converting the flow rate to the amounts of beer necessary to pour a preselected quantity of the liquid. The CPU fetches the differential pressure measurements from the RAM and EPROM for comparison in the comparator and receiving the corresponding flow rate.

The CPU then accumulates the incremental quantities of beer being poured until the accumulated quantity compares to the selected programmed quantity. When the accumulated total quantity compares with the programmed quantity the CPU activates the valve actuating solenoid 108 to terminate the pouring cycle.

During the pouring operation, the CPU is programmed to take additional differential pressure measurements readings at preselected intervals and compute new flow rates for new time periods. Thus highly accurate quantities are dispensed using a large number of precise measurements of flow rate over very short time intervals and adding the minute quantities over a longer period of time.

FLOW CHARTS

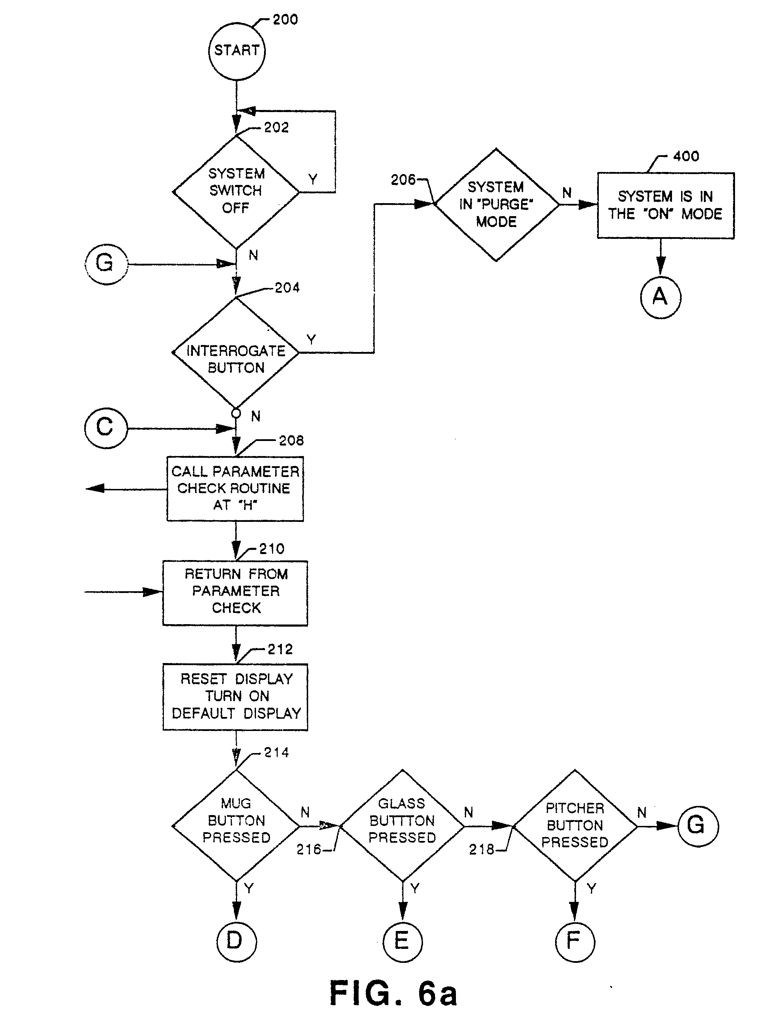

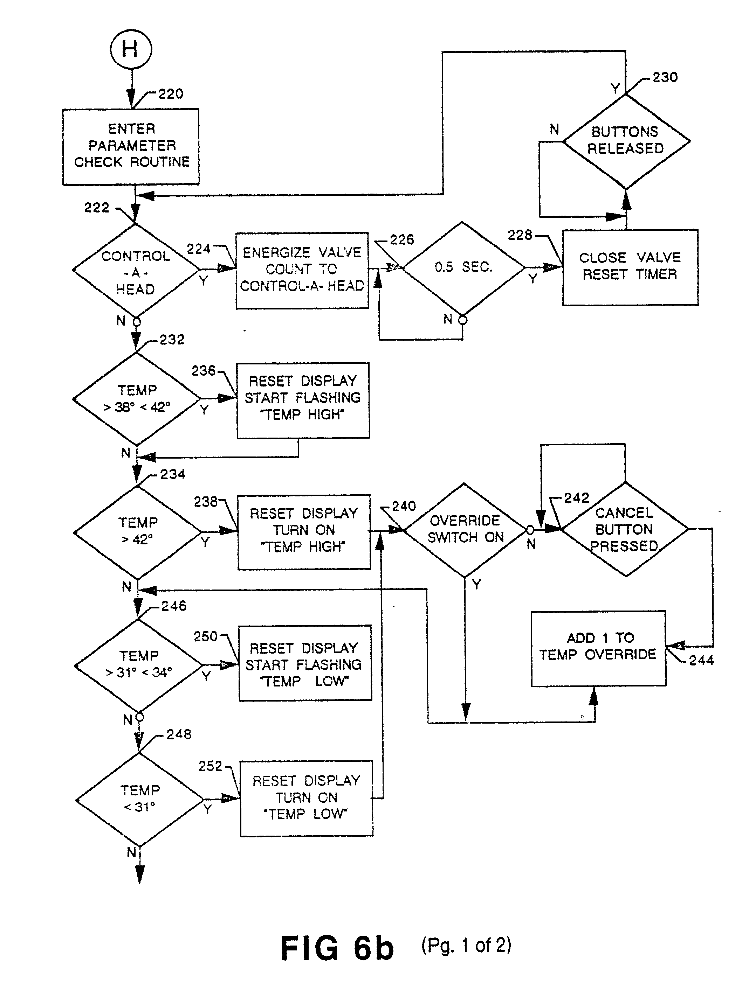

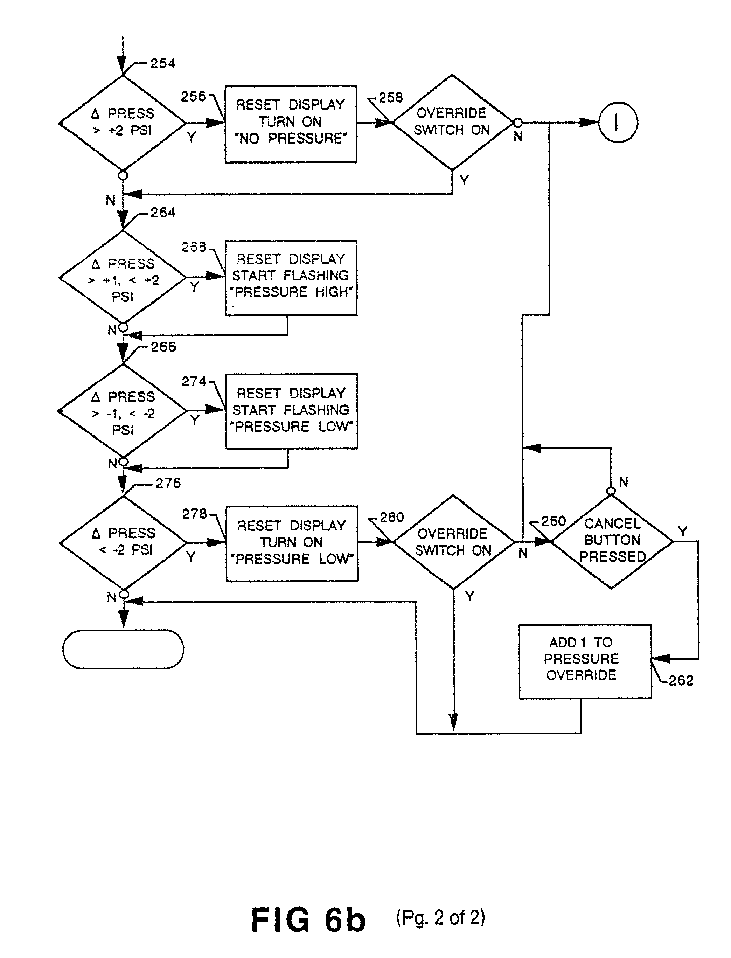

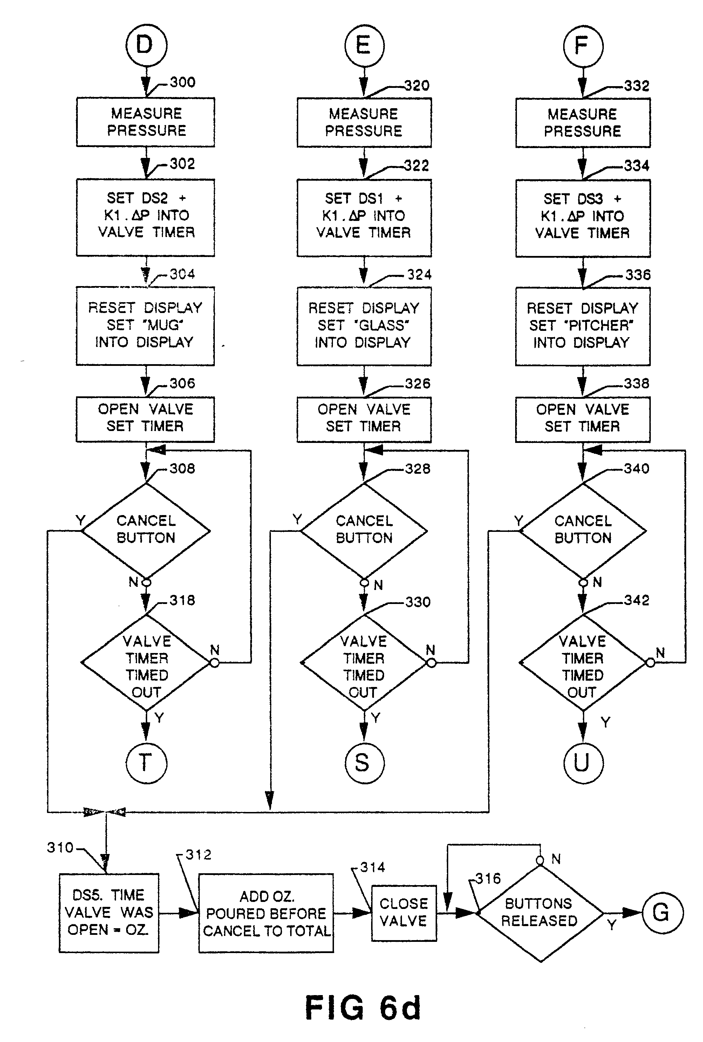

Referring now to figures 6a-6h, the operation of the computerized controller is described in conjunction with the operational flow charts. The system is initialized by turning the on/off/purge switch from the off position to either the on or purge position. Thus, at start 200 (Fig. 6a) a decision 202 is made whether the system switch is off. If off, return is made to state;else a decision 204 is made whether the interrogation (DISPLAY) button has been pressed; if yes, a decision 206 is made whether the system is in the purge mode, else an instruction 208 is issued to inter a parameter check routine H (Fig. 6b). After return from parameter check at 210 an instruction 212 is issued to reset display of turn on default display. Then a decision 214 is made whether the mug button has been pressed; if yes, the mug subroutine D (Fig 6d) is called, else a decision 216 is made whether the glass button has been pressed. If the glass button has been pressed the glass subroutine E (Fig. 6d) is entered, else return is made at G to the interrogate button decision 204.

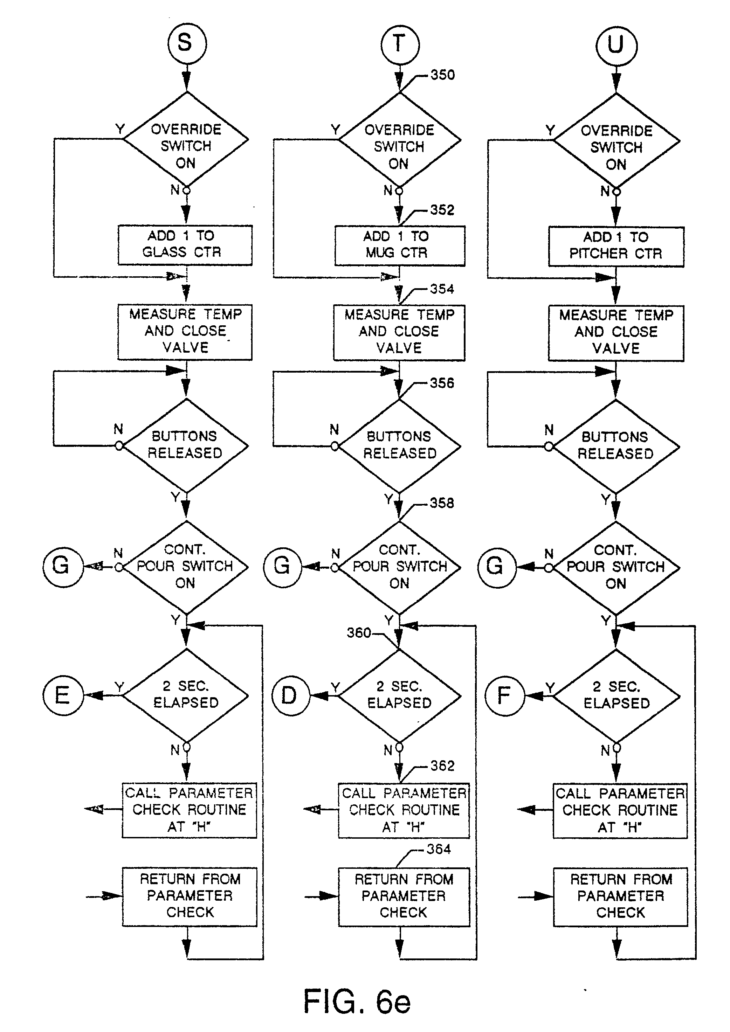

If the decision 206, as to whether the system is in the purge mode, the system is in the on mode and an instruction 400 is issued to enter the counter subroutine A (Fig. 6e).

PARAMETER CHECK SUBROUTINE

The parameter check subroutine H (Fig. 6b) begins with an instruction 220 to enter the parameter check call routine, and a decision 222 is made whether the control-a-head button has been pressed. If yes, the control-a-head button has been pressed, an instruction 224 is issued to energize the beer dispensing valve and add one count to the control-a-head counter. Then a decision 226 is made whether 0.5 seconds has lapsed; if no, return is made to repeat decision 226 until yes. When decision 226 is yes, an instruction 228 is issued to close the valve and reset the timer. Then a decision 230 is made whether the buttons have been released;if yes return is made to the control-a-head button pressed decision 222, else the decision 230 is repeated until the control-a-head button has been released. This action clears the system for parameter check.

Next, decisions 232 and 234 are considered, respectively, whether the temperature of the beer is greater than 38 or less than 42, or greater than 42. If decision 232 is yes, an instruction 236 is issued to reset the display and start flashing the message "TEMPERATURE HIGH"; else the decision 234 is made. If decision 234 is yes an instruction 238 is issued to reset the display and turn on the TEMPERATURE HIGH message for constant display. Then a decision 240 is made whether the override switch is on, if no a decision 242 is made whether the cancel button has been pressed and the decision repeated until yes, after which an instruction 244 is issued to add 1 to the temperature override count. If decision 240 is yes, then decisions 246 and 248 are considered, respectively, whether the temperature is above 31 but less than 34, and whether the temperature is less than 31. If decision 246 is yes, an instruction 250 is issued to reset display and start flashing the TEMPERATURE TOO LOW message; else the decision 248 is made, if yes an instruction 252 is issued to reset the display and turn on the TEMPERATURE LOW message for constant display and return is made to the override decision 240. If the temperature decision 232,234,246,and 248 are negative, the temperature is proper;then the pressure status is determined.

The determination of the pressure status begins with a decision 254 whether the pressure difference is greater than +2 psi.; if yes, an instruction 256 is issued to reset the display and turn on the NO PRESSURE message for constant display. Then a decision 258 is made whether the override switch is on; if no, the keg count subroutine I is entered and a decision 260 is made whether the cancel button has been pressed, when yes, an instruction 262 is issued to add 1 to the pressure override count and return. If decision 254 is no, then decisions 264 and 260 are considered, respectively, whether the pressure is greater than +1 and less than +2, and whether the difference pressure is less than -1 and greater than -2 psi. If decision 264 is yes, an instruction 268 is issued to reset the display and start flashing PRESSURE HIGH message; if negative, then an instruction 274 is issued to reset the display and to start flashing the PRESSURE LOW message; else a decision 276 is made whether the difference pressure is less than -2 psi. If decision 276 is yes, an instruction 278 is issued to reset the display and turn on the "PRESSURE LOW" message. Then a decision 280 is made whether the override switch is on; if no, then return is made to decision 260 whether the cancel button has been pressed; when pressed the instruction 262 is issued to add 1 to the pressure override count and return to the return from parameter check instruction 210 (Fig. 6a) is made. This return is also made when decision 280 is yes.

## KEG AND $CO_2$ CHANGE AND COUNT SUBROUTINE

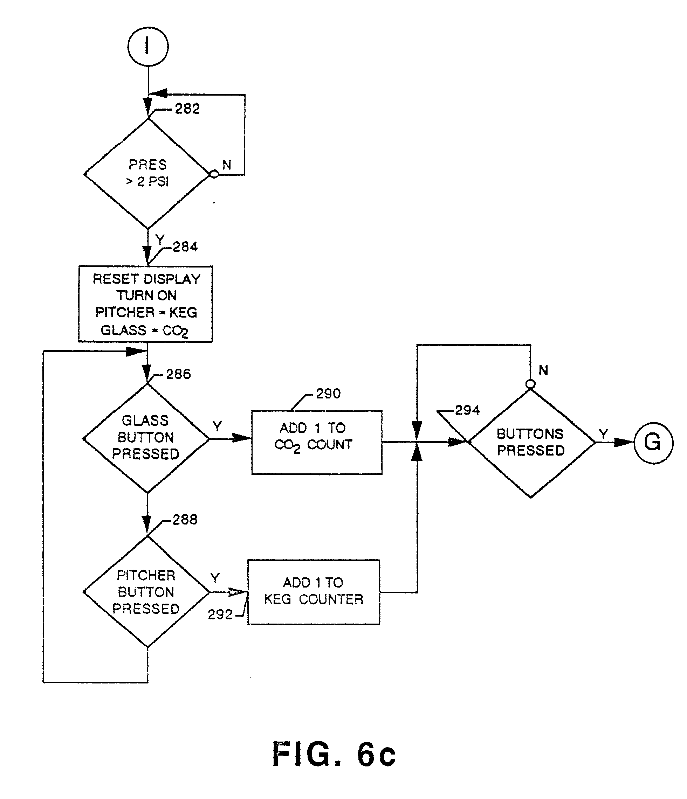

Referring now to Figure 6c, the keg change and count and CO2 count and change subroutine begins after the system has been shut down because of pressure failure, and the keg of CO2 bottle has been replaced. The subroutine begins with a decision 282 whether the difference pressure is greater than +2 psi. If no, the decision is repeated until the keg or CO2 bottle or both have been replaced and the decision is yes; when yes, an instruction 284 is issued to reset the display and turn on the Pitcher = keg; Glass = CO2. Next, decision 286 ano 288 are considered whether the glass button was pressed or the pitcher button has been pressed instructions 290 and 292, respectively, are issued as appropriate to add 1 to the CO2 counter or keg counter as appropriate. Then a decision 294 is made whether the buttons have been released. When released return is made to G Figure 6a. With return from the parameter check, the system is displaying a public relations type message and the system is awaiting a mug, glass, or pitcher pouring decision to call up the mug, glass, or pitcher subroutines (Fig. 6d).

## MUG, GLASS, AND PITCHER SUBROUTINES

The mug subroutine D (Fig. 6d) begins with instructions 300,302,304 and 306, respectively, to measure the difference pressure into the valve timer, reset display and set "mug" into display, and open valve and start timer. During timing of the pour a decision 308 is made whether the cancel button is pressed. If yes, an instruction 310 is issued to determine the time the valve was open as the time represents the ounces that have been poured prior to cancellation. Then an instruction 312 is issued to add the number of ounces poured before cancellation to the total ounces poured. Next, an instruction 314 is issued to close the valve, and a decision 316 is made whether the cancel button has been released. Return is then made to G, Figure 6a. If the decision 308 is no, then a decision 318 is made whether the time of the valve timer has expired; if no, return is made to decision 308 to determine if the cancel button is pushed before decision 318 becomes yes. When yes, the mug counter subroutine T is entered.

## MUG COUNTER AND REPEAT POUR SUBROUTINE

When the glass subroutine E is entered, instructions 320,322,324, and 326 are issued, respectively, to measure the beer pressure, set DS1 + K1. difference pressure into the valve timer, reset the display and set "glass" into the display, and open the valve and start the timer. Then a decision 328 is made whether the cancel button is pressed; if yes, the instructions 310,312, and 314 and the decision 316 repeated. If no, a decision 330 is constantly made whether the time of the valve timer has expired without the cancel button being pressed. When the time has expired, the glass counter subroutine S is entered (Fig. 6e).

Similarly, when the pitcher subroutine F is entered, instructions 332,334,336, and 338 are issued, respectively, to measure the pressure difference, set DS3 + K1 difference pressure into the valve timer for determining constantly the time to pour a pitcher of beer, reset display and set "pitcher" in display, and open valve and start timer. Then a decision 340 is continuously made during the pour time whether the cancel button is pressed; if yes, the instructions 310,312, and 314 are issued and the decision 316 made and return is made to G Figure 6a; else a decision 342 is made whether the time of the valve timer has expired without the cancel button being pressed; if yes, then the pitcher counter subroutine U is entered (Fig. 6e).

The mug counter and repeat pour subroutine T (Fig. 6e) begins with a decision 350 whether the override switch is on; if no an instruction 352 is issued to add one to the mug counter and an instruction 354 is issued to measure temperature and close the valve. If decision 350 is yes, skip is made to instruction 354. Next, a decision 356 is made continuously whether the buttons have been released and when released a decision 358 is made whether the repeat pour switch is on. If the repeat pour switch is on, a decision 360 is made whether two seconds have elapsed; if yes, return is made to the mug pouring subroutine D (Fig. 6d); else instructions 362 and 364 are issued to call up the parameter check subroutine H (Fig. 6b) and after parameter check to return to decision 360 as to whether two seconds have elapsed. If decision 358 is no, return is made to G (Fig. 6a).

With the exceptions that: the glass counter and the pitcher counter are incremented by one for each glass or pitcher poured; and after two seconds have elapsed in the repeat pour mode, return is made to the glass and pitcher pouring subroutines E and F (Fig. 6d), respectively, the glass counter subroutine S (Fig. 6e) and the pitcher Counter subroutine U are identical to the mug counter subroutine. Thus the mug subroutine with these changes need not be repeated for the glass and pitcher counter subroutines E and F.

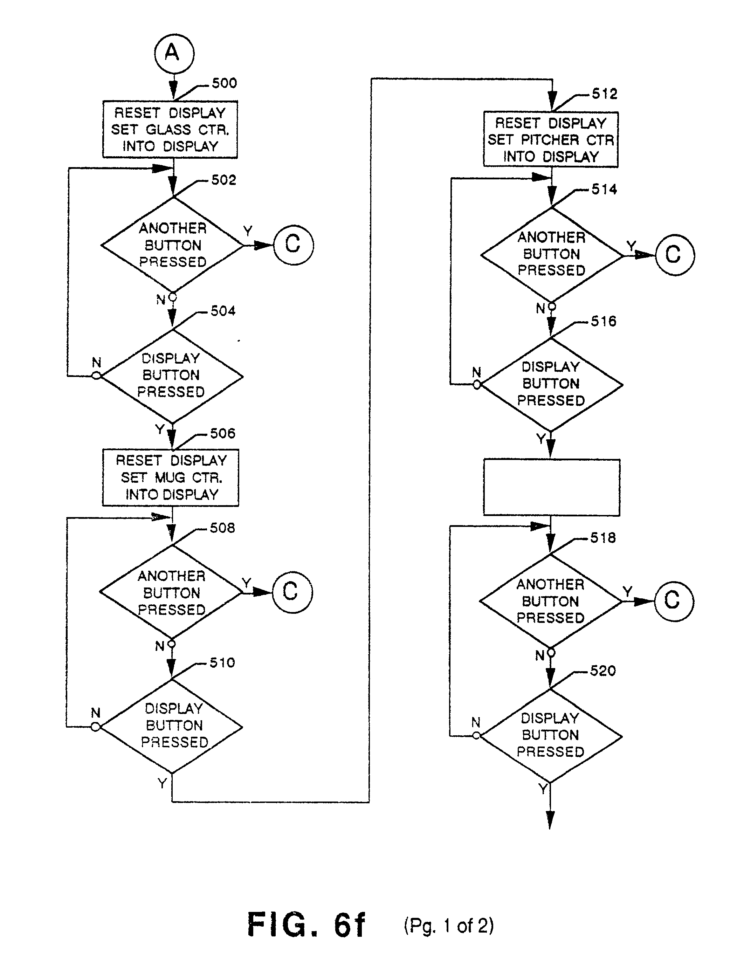

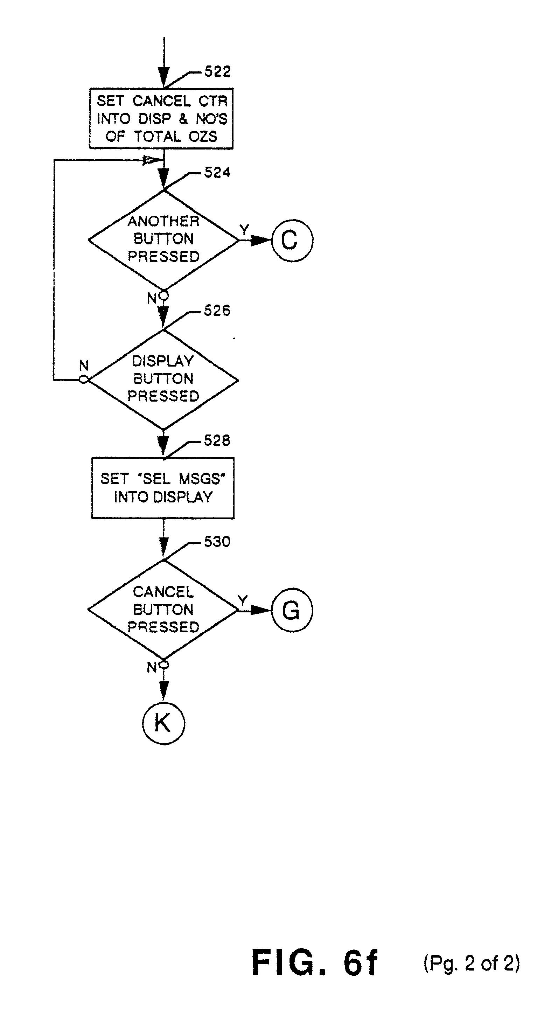

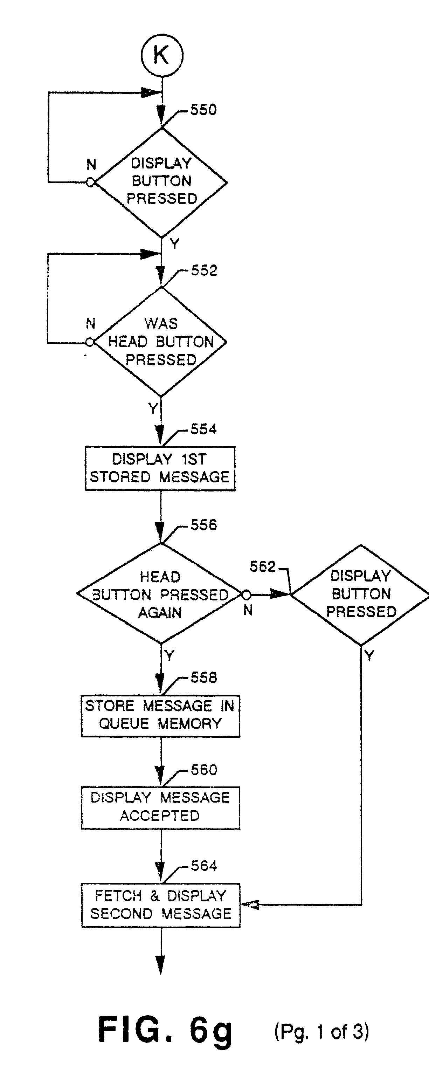

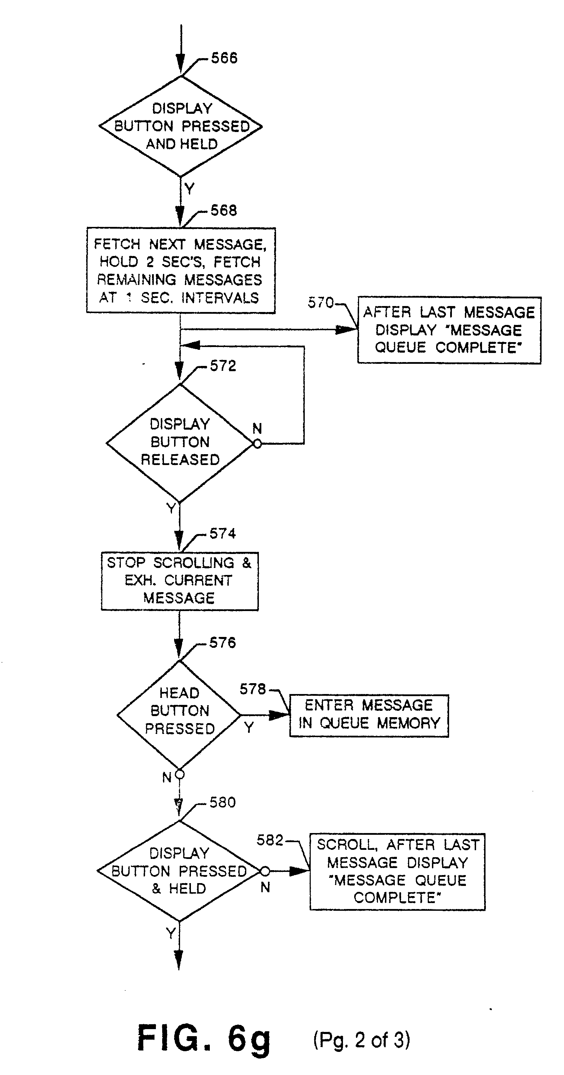

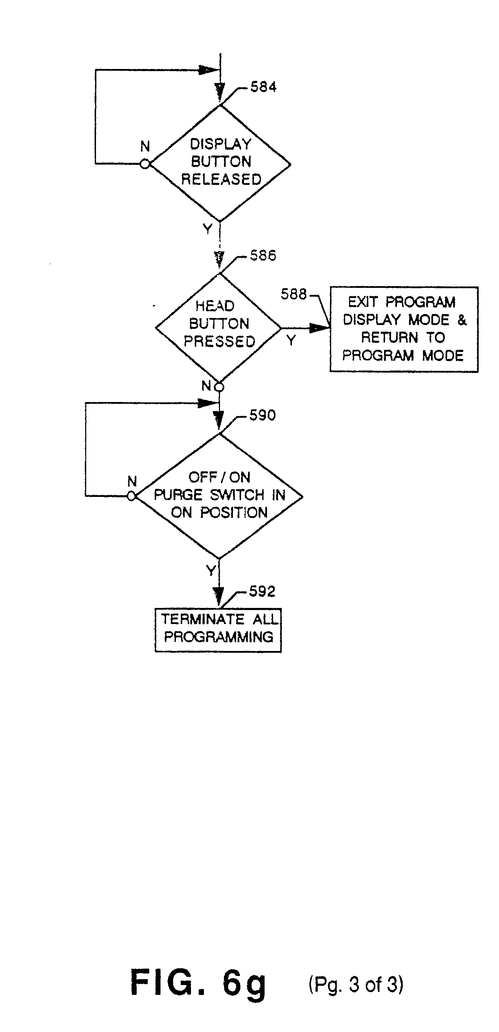

Returning now to Figure 6a and to the decision 206 whether the beer dispensing system is in the purge mode, if yes, the calibration subroutine b (Fig. 6f) is entered, else an instruction 400 is issued indicating that the system is in the on mode and the accounting subroutine A (Fig. 6g) is called.

## ACCOUNTING SUBROUTINE

Referring now to Figure 6f, with the system in the on mode, the accounting subroutine begins with an instruction 500 to set the glasses counter count into display. Next, a decision 502 is made whether another button has been pressed; if yes, return is made to C (Fig. 6a) and the beer dispensing routine repeated beginning with the instruction 208 to call parameter check subroutine; if no, a decision 504 is made whether the display button has been pressed. If the display button has not been pressed return is made to decision 502 until the decision 504 is yes; when yes, an instruction 506 is issued to set mug count into the display.

Next, a decision 508 is made whether another button has been pressed; if yes, return is made to C (Fig. 6a) and the beer dispensing routine repeated beginning with the instruction 208; if no, a decision 510 is made whether the display button has been pressed. If no, return is made to decision 508 and repeated until the decision 510 is yes. Then an instruction 512 is issued to set the pitcher count into the display, and decision 514 is made whether another button has been pressed. If yes. return is made to C (Fig. 6a) else a decision 516 is made whether the display button has been pressed. If decision 516 is yes, then a decision 518 is made whether another button has been pressed. If decision 518 is yes, return is made to C (Fig. 6a) or else a decision 520 is made whether the display button has been pressed. If no, return is made to decision 518 and the decisions repreated until the display button has been pressed; if yes, an instruction 522 is issued to display the number of cancels and the numbers of total ounces poured prior to cancels.

Next a decision 524 is made whether another button has been pressed; if yes, return is made to C (Fig. 6a); if no a decision 526 is made whether the display button has been pressed. If no, return is made to decision 524 and repeated; if yes, an instruction 528 is issued to set SELECT MESSAGES into the display.

Next, a decision 530 is made whether the cancel button has been pressed; if yes, return is made to G (Fig. 6a) to begin the beer dispensing routine again with the interrogate decision 204; else the default message subroutine K (Fig. 6h) is called.

## DEFAULT MESSAGE SUBROUTINE

The default message subroutine begins with a decision 550 (Fig. 6h) whether the display button has been pressed and the message PROGRAM DISPLAY exhibited by the display. If yes, a decision 552 is made whether the HEAD button has been pressed; if yes, an instruction 554 is issued to display the first stored message. Then a decision 556 is made whether the HEAD button has been dressed again. If yes, an instruction 558 Is issued to input the message being displayed into the queue memory ano an instruction 560 issued to display the message MESSAGE ACCEPTED for two seconds and return to display the original message; else a decision 562 is made whether the DISPLAY button has been pressed. If the decision 562 is yes, an instruction 564 is issued to fetch the next stored message for display. Next a decision 566 is made whether the DISPLAY button is pressed and held; if yes, an instruction 568 is issued to fetch the next message for a two second display, and thereafter to fetch the remaining messages at one second intervals for display. After the last message is displayed an instruction 570 is issued to display the message MESSAGE OUEUE COMPLETE. A decision 572 is made whether the display button has been released when the DISPLAY button is released an instruction 574 is issued to terminate the scrolling and exhibit the current message. Then a decision 576 is made whether the HEAD button has been pressed; if yes, an instruction 578 is issued to enter the message into the queue memory; else a decision 580 is made whether the DISPLAY button has been pressed and held again; if yes, an instruction 582 is issued to scroll the remaining stored messages and at the end thereof to display the message MESSAGE QUEUE COMPLETE. Then a decision 584 is made whether the display button has been released. If no, the decision is continued until the display button has been released. Next, a decision 586 is made whether the HEAD button has been pressed; if yes, an instruction 588 is issued to exit the program display mode and return is made to the program mode. Else, a decision 590 is made whether the off/on/purge switch has been moved from the purge position to the on or off position; if yes, an instruction 592 is issued to terminate all programming operations. Else the decision 590 is repeated until the switch is moved from the purge position. It will be appreciated by those skilled in the art that instructions can be issued to read the real clock and add the time and date to the transactions, and to the accounting actions. Further, with respect to the accounting, instructions can be issued to store the accounting information for each accounting period, and to provide a running record for tax purposes. Although only a single embodiment of the invention has been disclosed. it will be apparent to a person skilled in the art that various modifications to the details of construction shown and described may be made without departing from the scope of this invention.

## Claims

1. A computerized beverage dispensing system comprising:
a first connector means (62) for connection to a pressurized source of beverage;
a flow meter means (18) connected to the first connector means and having a preselected passageway length (111) for providing a substantially increased pressure difference to a pressure differential measuring means (120) for measuring differential pressures of the beverage flowing there through and outputting signals representative thereof;
a faucet means (22) connected to the flow meter means including walls forming a passageway (64) for dispensing the beverage;
a valve assembly means (86,92,96,98,100,104) connected to the faucet means for opening and closing the passageway;
an electromechanical valve assembly actuator means (104,106,108) connected to the valve assembly means for operating the valve assembly means; and
a programmable controller means (30) including a first means (142,144) connected to the flow meter means for receiving the differential pressure signals, second means (144,150) connected to the electromechanical valve assembly for operation responsive to the differential pressure signals for generating quantity amounts of the beverage for a duration necessary to dispense a preselected amount of the beverage and a third means (14) for connecting a cut off signal to the electromechanical valve assembly actuator means when the preselected amount of beverage has been poured for controlling the valve assembly means to dispense the preselected amount of beverage through the faucet means.

2. A computerized beverage dispensing system according to claim 1 wherein the flow meter includes walls of known material forming a first passageway (111) having a preselected size, first and second ports (128,130) formed in the passageway, respectively at beginning and ending points for defining a preselected length of the passageway, walls connected to the first and second ports for forming a second passageway (124,126), and a pressure differential measuring means (120) connected to the second passageway for measuring the pressure difference between the first and second ports of the first passageway and outputting electrical signals indicative thereof.

3. A computerized beverage dispensing system according to claim 2 wherein the flow meter (18) includes a block (110) of known material having walls forming the first and second passageways (111,124,126), and a well (116) for the pressure differential measuring means.

4. A computerized beverage dispensing system according to claim 3 wherein the walls of the block of known material further form a well (118) for a beverage temperature transducer.

5. A computerized beverage dispensing system according to claim 2 wherein the pressure differential measuring means (120) is a pressure differential measuring device.

6. A computerized beverage dispensing system according to claim 5 wherein the pressure differential measuring means (120) is a differential pressure transducer.

7. A computerized beverage dispensing system according to claim 1 wherein of the valve assembly means includes:
A valve stem (96) having first and second ends and a body portion there between;
a faucet passageway closing means (98,100,102) connected to the first end of the valve stem; and
a seal assembly means (80) including a sealing sleeve means (82) for receiving the body portion of the valve stem and having first and second ends and a body portion there between, said first end of the sleeve means being attached to the faucet intermediate ends of the faucet passageway, a seal expander means (92) attached to the first end of the sleeve, said first end of the sleeve means coacting with the seal expander means and body portion of valve stem for forming a substantially permanent barrier against seepage of the beverage into the sleeve means by wiping the beverage from the stem body surface as it passes through the sealing means during valve closing; and a valve opening and closing means (104,106,108) adjacent the second end of the valve stem for operating the faucet passageway closing means.

8. A computerized beverage dispensing system according to claim 7 wherein the sleeve means further includes a valve stem guide means (86) adjacent to the second end thereof.

9. A computerized beverage dispensing system according to claim 7 wherein the second end of the sleeve means further includes a valve spring support (90) for supporting an end of a valve spring.

10. A computerized beverage dispensing system according to claim 9 wherein the valve assembly means further includes a valve spring (94) having a first end mounted on the valve spring support (96) of the sleeve means, and a spring retainer means (104) connected to the second end of the valve stem and coacting with the spring support of the sleeve means for retaining the valve spring in operative association with the valve stem for closing the faucet passageway closing means.

11. In a beverage dispensing system a flow meter means for measuring the differential pressure of a beverage in a line segment, said flow meter means including:

Walls of known material forming a first passageway (111) having a preselected size, first and second ports formed in the passageway, respectively, at beginning and ending points (128,130) for defining a preselected length of the passageway, walls connected to the first and second ports for forming a second passageway (124,126) for the beverage flowing in the first passageway at the first and second ports, and a pressure differential measuring means (120) connected to the second passageway for measuring the pressure difference between the beverage in the second passageway and outputting electrical signals indicative thereof.

12. In a beverage dispensing system a valve sealing assembly means including:

a valve stem (96) having first and second ends and a body portion there between;

a faucet passageway closing means (100,102) connected to the first end of the valve stem;

a seal assembly means including a sealing sleeve means (82) for receiving the body portion of the valve stem and having first and second ends and a body portion there between, said first end (84) of the sleeve means being attached to the faucet intermediate ends of the faucet passageway, a seal expander means (92) attached to the first end of the sleeve, said first end of the sleeve means coacting with the seal expander means and body portion of the valve stem for forming a substantially permanent barrier against seepage of the beverage into the sleeve means by wiping the beverage from the stem body surface as it passes through the sealing means during valve closing; and a valve opening and closing means (104,106,108) adjacent the second end of the valve stem for operating the faucet passageway closing means.

FIG. 1

24 —

14 —

108 ⌐

32 ⌐

106

66 ⌐

56 ⌐

92 ⌐

98

102

64

100

94

80

104

54

58

74

22

12

18

122

134

4

4

**FIG. 2**

FIG. 3

**FIG. 4**

14

FIG. 5 (Pg. 1 of 2)

**FIG. 5** (Pg. 2 of 2)

FIG. 6a

**FIG 6b** (Pg. 1 of 2)

**FIG 6b**   (Pg. 2 of 2)

FIG. 6c

EP 0 414 156 A2

(D) → 300

MEASURE PRESSURE

↓ 302

SET DS2 + K1.ΔP INTO VALVE TIMER

↓ 304

RESET DISPLAY SET "MUG" INTO DISPLAY

↓ 306

OPEN VALVE SET TIMER

↓ 308

CANCEL BUTTON — Y

N ↓ 318

VALVE TIMER TIMED OUT — N

Y ↓

(T)

---

(E) → 320

MEASURE PRESSURE

↓ 322

SET DS1 + K1.ΔP INTO VALVE TIMER

↓ 324

RESET DISPLAY SET "GLASS" INTO DISPLAY

↓ 326

OPEN VALVE SET TIMER

↓ 328

CANCEL BUTTON — Y

N ↓ 330

VALVE TIMER TIMED OUT — N

Y ↓

(S)

---

(F) → 332

MEASURE PRESSURE

↓ 334

SET DS3 + K1.ΔP INTO VALVE TIMER

↓ 336

RESET DISPLAY SET "PITCHER" INTO DISPLAY

↓ 338

OPEN VALVE SET TIMER

↓ 340

CANCEL BUTTON — Y

N ↓ 342

VALVE TIMER TIMED OUT — N

Y ↓

(U)

---

310 — DS5. TIME VALVE WAS OPEN = OZ.

→ 312 — ADD OZ. POURED BEFORE CANCEL TO TOTAL

→ 314 — CLOSE VALVE

→ 316 — BUTTONS RELEASED — N

Y → (G)

## FIG 6d

21

FIG. 6e

(A)

├─ 500

RESET DISPLAY
SET GLASS CTR.
INTO DISPLAY

├─ 502

ANOTHER
BUTTON
PRESSED — Y → (C)

N

├─ 504

DISPLAY
BUTTON
PRESSED — N

Y ├─ 506

RESET DISPLAY
SET MUG CTR.
INTO DISPLAY

├─ 508

ANOTHER
BUTTON
PRESSED — Y → (C)

N

├─ 510

DISPLAY
BUTTON
PRESSED — N

Y

├─ 512

RESET DISPLAY
SET PITCHER CTR
INTO DISPLAY

├─ 514

ANOTHER
BUTTON
PRESSED — Y → (C)

N

├─ 516

DISPLAY
BUTTON
PRESSED — N

Y

├─ 518

ANOTHER
BUTTON
PRESSED — Y → (C)

N

├─ 520

DISPLAY
BUTTON
PRESSED — N

Y

# FIG. 6f   (Pg. 1 of 2)

FIG. 6f  (Pg. 2 of 2)

FIG. 6g   (Pg. 1 of 3)

FIG. 6g (Pg. 2 of 3)

26

**FIG. 6g**  (Pg. 3 of 3)